# NEUE EUROPÄISCHE PATENTSCHRIFT

(11) **EP 2 837 536 B2**
(45) Veröffentlichungstag und Bekanntmachung des Hinweises auf die Entscheidung über den Einspruch: **06.04.2022**
(45) Hinweis auf die Patenterteilung: 30.11.2016
(21) Anmeldenummer: 14174058.9
(22) Anmeldetag: 26.06.2014
(51) Int. Cl.: B60T 17/04, B23D 79/12

(54) **Vorrichtung zum Entmanteln eines Rohrendes einer mit einer Kunststoffbeschichtung beschichteten Brems- oder Kraftstoffleitung**
Device for removing the coating from a pipe end of a brake or fuel line with a plastic coating
Dispositif destiné à dénuder une extrémité de tuyau d'une conduite de frein ou de carburant revêtue d'une couche en matière synthétique

(30) Priorität: 04.07.2013 DE 102013011213
(43) Veröffentlichungstag der Anmeldung: 18.02.2015
(73) Patentinhaber: AUDI AG, 85045 Ingolstadt (DE)
(72) Erfinder: Helfer, Helmut, 85051 Ingolstadt (DE); Wieland, Thomas, 91174 Spalt (DE)
(74) Vertreter: Liebl, Thomas

(56) Entgegenhaltungen:
- DE-A1-102008 043 876
- DE-U1- 20 214 365
- US-A- 3 965 570
- US-A- 4 487 643

## Beschreibung

Die Erfindung betrifft eine Vorrichtung zum Entmanteln eines Rohrendes einer mit einer Kunststoffbeschichtung beschichteten Brems- oder Kraftstoffleitung nach dem Oberbegriff des Patentanspruches 1 sowie ein Verfahren zum Entmanteln des Rohrendes nach dem Patentanspruch 10.

Eine Brems- oder Kraftstoffleitung kann mehrschichtig aufgebaut sein, und zwar mit einem inneren Aluminium- oder Stahlrohr, einer radial äußeren Aluminium- oder Zink-Schicht zum Korrosionsschutz sowie einer radial äußeren Kunststoffbeschichtung zum Schutz vor äußeren mechanischen Einflüssen.

Eine solche Bremsleitung weist an ihrem Rohrende in gängiger Praxis einen Bördelkopf auf, der mittels einer Überwurfmutter mit einem Bremsdruckgeber verbind bar ist. An die Dichtfläche des Bördelkopfes sind besondere Anforderungen zu stellen. So muss die Dichtfläche metallisch rein sowie umlaufend glatt, rissfrei und frei von Riefen sein, um eine einwandfreie Abdichtung mit dem Druckgeber zu gewährleisten. Problematisch ist speziell die Vorbereitung für die Durchführung einer einwandfreien Bördelung des Rohrendes, bei der die Kunststoffbeschichtung rückstandfrei vom Rohrende zu entfernen ist. Gegebenenfalls nicht vom Rohrende entfernte Kunststoffpartikel können nämlich eine erhebliche Gefahr für die Funktionssicherheit des Bremssystems darstellen, sofern solche Kunststoffpartikel bei Montagevorgängen in den hydraulischen Bremskreislauf gelangen.

Aus der DE 202 14 365 U1 ist eine Vorrichtung zum Entmanteln eines Rohrendes einer Bremsleitung bekannt. Die Vorrichtung weist ein Schälwerkzeug auf, deren Schneiden die Kunststoffbeschichtung im Bereich des Rohrendes abschälen, ohne den metallischen Rohrkern der Bremsleitung zu beschädigen.

Bei Verwendung des Schälwerkzeugs besteht ein Risiko darin, dass aufgrund von relativ großen Fertigungstoleranzen der Bremsleitung unbeabsichtigt auch die Zink-Schicht abgeschält wird, wodurch der Korrosionsschutz nicht mehr gewährleistet ist. Aus der DE 295 10 705 U1 ist eine alternative Vorrichtung zur Entfernung der Kunststoffbeschichtung vom Rohrende einer Brems- oder Kraftstoffleitung bekannt, bei der die Kunststoffbeschichtung nicht mit einem Schälwerkzeug, sondern durch Laserbehandlung abgetragen wird. Die Bereitstellung einer solchen Laserbehandlung ist jedoch bauteilaufwändig und daher entsprechend kostenintensiv.

Die Aufgabe der Erfindung besteht darin, eine Vorrichtung sowie ein Verfahren bereitzustellen, die ein prozesssicheres Entmanteln des Rohrendes der mit einer Kunststoffbeschichtung beschichteten Brems- oder Kraftstoffleitung ermöglicht.

Die Aufgabe der Erfindung ist durch die Merkmale des Patentanspruches 1 oder des Patentanspruches 10 gelöst. Bevorzugte Weiterbildungen der Erfindung sind in den Unteransprüchen offenbart.

Die Erfindung beruht auf der Problematik, dass bei dem, aus dem Stand der Technik bekannten Abschälen der Kunststoffbeschichtung die Gefahr einer Beschädigung des radial inneren metallischen Rohrkerns durch das Schälwerkzeug besteht. Vor diesem Hintergrund weist die erfindungsgemäße Vorrichtung nach dem Kennzeichnungsteil des Patentanspruches 1 kein Schälwerkzeug, sondern zumindest ein Druckelement auf, mit dem die Kunststoffbeschichtung durch eine mechanische Walkbearbeitung vom Rohrkern ablösbar ist. Bei der Walkbearbeitung ist die Kunststoffbeschichtung wechselweise einer Druckbelastung und einer Druckentlastung unterworfen.

In einer bevorzugten technischen Realisierung kann das Druckelement ein Rollenelement sein, das mit einer Anpresskraft in Rollkontakt mit dem, zu entmantelnden Rohrende bringbar ist. Zur Entfernung der Kunststoffbeschichtung wird ein Abrollvorgang durchgeführt, bei dem sich infolge Walkarbeit die Kunststoffbeschichtung vom metallischen Rohrkern ablöst. Im Unterschied zum Stand der Technik wird also die Kunststoffbeschichtung weder durch Abschälen noch durch Laserbearbeitung abgetragen. Vielmehr wird die abzutragende Kunststoffbeschichtung einer Walkarbeit unterworfen, bei der die Kunststoffbeschichtung unter Änderung der Gefügestruktur versprödet und sich dadurch prozesssicher von dem metallischen Rohrkern ablösen lässt. Mit der Walkbearbeitung findet - im Vergleich zu den bereits bekannten Ablöseverfahren - ein neues physikalisches Wirkprinzip Anwendung.

Zur Realisierung des Abrollvorganges ist es bevorzugt, wenn das Rollenelement um eine Drehachse rotierbar ist, die achsparallel zur Längsachse des Rohrendes positioniert ist. Dabei kann das Rollenelement mit seiner Rollfläche über eine vorgegebene Entmantelungslänge durchgängig in Linienkontakt mit dem zu entmantelnden Rohrende gebracht sein.

Für ein prozesssicheres Ablösen der Kunststoffbeschichtung vom Rohrkern kann die Vorrichtung ein Schneid- oder Prägeelement aufweisen, mit der eine Sollbruchkante in der Kunststoffbeschichtung festlegbar ist. An der Sollbruchkante kann die, durch die Walkbearbeitung versprödete Kunststoffbeschichtung ohne weiteres abreißen, wodurch ein sauberer prozesssicherer Übergang des freigelegten Rohrendes zur verbleibenden Kunststoffbeschichtung gewährleistet ist.

Besonders bevorzugt ist es, wenn das Schneid- oder Prägeelement eine am Rollenelement angeformte Prägekante ist. Die Prägekante kann mit einem vorgegebenen Übermaß die Rollfläche des Rollenelementes überragen. Das Übermaß der Prägekante ist bevorzugt so bemessen, dass es kleiner als die Materialstärke der abzutragenden Kunststoffbeschichtung ist. Die Kunststoffbeschichtung weist in gängiger Praxis eine Materialstärke im Bereich von ca. 0,25 mm auf. Das verwendete Kunststoffmaterial ist üblicherweise ein Polyamid.

Zur Durchführung des Abrollvorgangs kann das Rollenelement an einem Träger drehgelagert sein. Der Träger kann wiederum über eine Antriebsspindel angetrieben werden, und zwar so, dass sich die Rollenelement-Drehachse mit vorgegebener Drehzahl um die zentrisch ausgerichtete Längsachse des Rohrendes dreht.

Besonders bevorzugt ist es, wenn nicht nur ein, sondern eine Anzahl von Rollenelementen vorgesehen ist, beispielsweise drei oder vier Rollenelemente, die gleichmäßig umfangsverteilt um das Rohrende herum angeordnet sind. Die Rollenelemente begrenzen mit ihren einander zugewandten Rollenflächen einen zentrischen Aufnahmeraum, in den das zu entmantelnden Rohrende mit einer vorgegebenen Entmantelungslänge einsteckbar ist. Der Einsteckvorgang erfolgt bevorzugt unter Presspassung, bei der die Rollenelemente mit der bereits oben erwähnten Anpresskraft gegen das Rohrende drücken. Anschließend wird der Rollenelement-Träger in Rotation versetzt, wodurch die Rollenelemente am noch kunststoffbeschichteten Rohrende der Brems- oder Kraftstoffleitung abrollen.

Die Vorrichtung kann bevorzugt ein Anfaswerkzeug aufweisen, mit dem die stirnseitige Außenkante des Rohrendes noch vor der Entmantelung angefast werden kann. Auf diese Weise wird das Einfädeln des Rohrendes in den oben erwähnten, zentrischen Aufnahmeraum vereinfacht.

Zur weiteren Reinigung kann anschließend nach erfolgter Entmantelung der freigelegte metallische Rohrkern mit einem Bürstwerkzeug abgebürstet werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer Seitenschnittdarstellung ein bereits fertig bearbeitetes Rohrende einer Bremsleitung mit einem Bördelkopf;
- Fig. 2 und 3: jeweils das Rohrende der Bremsleitung in unterschiedlichen Bearbeitungszuständen; sowie
- Fig. 4 bis 7: jeweils unterschiedliche Ansichten eines Werkzeugs zur Entschichtung bzw. zum Entmanteln des Rohrendes.

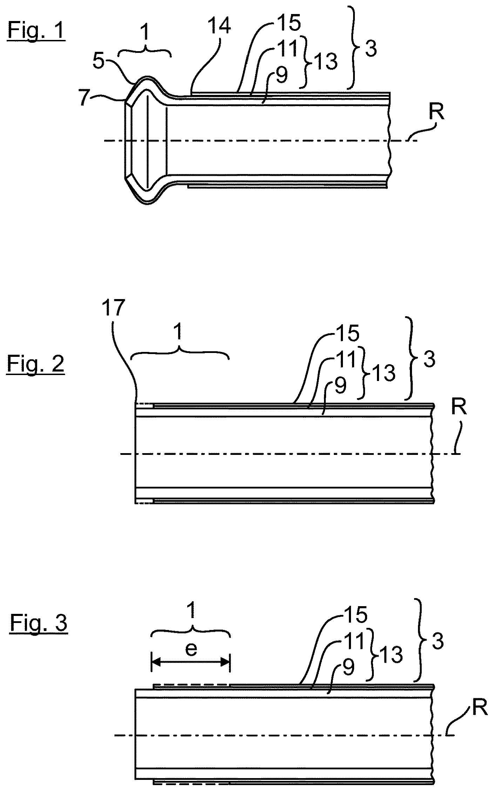

In der Fig. 1 ist ein an sich bekanntes Rohrende 1 einer Bremsleitung 3 für ein Kraftfahrzeug gezeigt. Das Rohrende 1 weist einen Bördelkopf 5 auf, der mittels einer nicht dargestellten Überwurfmutter mit zum Beispiel einem Bremsdruckgeber fluiddicht verbindbar ist. Für eine solche fluiddichte Verbindung weist der Bördelkopf 5 stirnseitig eine metallisch reine, konisch ausgebildete Dichtfläche 7 auf, die umlaufend glatt, rissfrei sowie frei von Riefen ist. Das Rohrende 1 ist in gängiger Praxis rotationssymmetrisch um die Rohrachse R ausgebildet.

Wie aus der Fig. 1 weiter hervorgeht, ist die Bremsleitung 3 und damit auch das Rohrende 1 mehrschichtig aufgebaut, und zwar mit einem radial inneren Stahlrohr 9, auf dem eine Aluminium- oder Zink-Schicht 11 für einen Korrosionsschutz aufgetragen ist. Das Stahlrohr 9 und die Zink-Schicht 11 bilden einen metallischen Rohrkern 13, der außenseitig mit einer Kunststoffbeschichtung 15, insbesondere einer PA-Schicht, ummantelt ist.

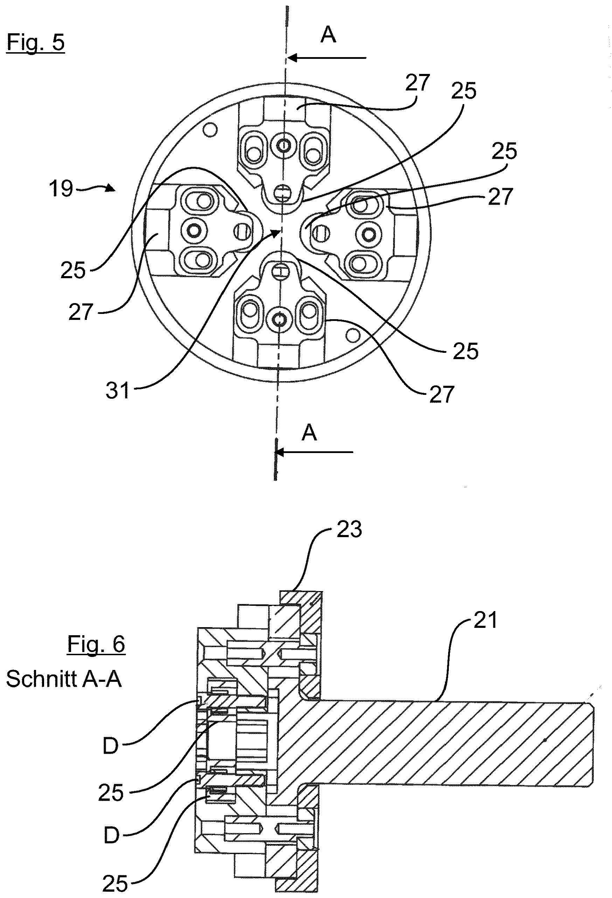

Nachfolgend werden anhand der Fig. 2 bis 7 die Verfahrensschritte zur Herstellung der in der Fig. 1 gezeigten Bördelkopf-Geometrie der Bremsleitung 3 beschrieben: So wird zunächst gemäß der Fig. 2 eine Bremsleitung 3 mit einem noch unbearbeiteten Rohrende 1 bereitgestellt. Mit Hilfe eines nicht gezeigten Anfaswerkzeugs wird die freie Stirnseite des Rohrendes 1 ebenflächig bearbeitet und zudem auch die stirnseitige Außenkante 17 des Rohrendes 1 angefast. Der sich beim Anfasvorgang ergebende Materialabtrag ist in der Fig. 2 mit gestichelten Linien angedeutet.

In einem anschließenden, in der Fig. 3 veranschaulichten Verfahrensschritt erfolgt ein Entmanteln bzw. ein Entschichten des Rohrendes 1, bei dem über eine vorgegebene Entmantelungslänge e die Kunststoffbeschichtung 15 vom Rohrende 1 abgetragen wird, und zwar unter Freilegung der Zink-Schicht 11. Der hierdurch entstehende Materialabtrag ist in der Fig. 3 ebenfalls mit gestrichelten Linien angedeutet.

Anschließend erfolgt mit Hilfe eines nicht dargestellten Bördel-Werkzeuges eine Bördelung des Rohrendes 1, wodurch der in der Fig. 1 dargestellte Bördelkopf 5 erzeugt wird.

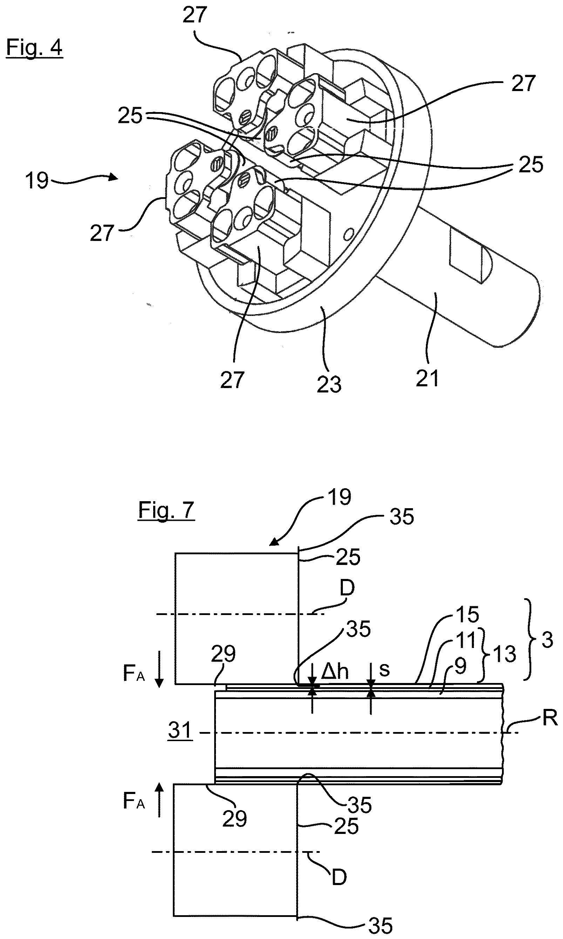

Die Erfindung betrifft insbesondere den in der Fig. 2 angedeuteten Verfahrensschritt zum Entmanteln des Rohrendes 1. Hierzu ist das in den Fig. 4 bis 7 gezeigte Werkzeug vorgesehen, dessen Aufbau und Funktionsweise nachfolgend beschrieben ist: So weist das Werkzeug 19 eine Antriebsspindel 21 auf, die in einen in etwa scheibenförmigen Träger 23 übergeht. Am Träger 23 sind insgesamt vier Rollenelemente 25 (bzw. Schneidbuchsen) drehbar um eine Drehachse D drehbar gelagert. Die Drehachsen D der Rollenelemente 25 sind mit Bezug auf die Antriebsspindel 21 außermittig angeordnet.

Die vier Rollenelemente 25 sind zudem radial verstellbar über Schlitten 27 an dem Träger 23 montiert. Wie aus den Fig. 4 bis 7 weiter hervorgeht, begrenzen die vier Rollenelemente 25 mit ihren Rollenflächen 29 einen zentrischen Aufnahmeraum 31, in den das zu entmantelnde Rohrende 1 (in einem, in der Fig. 2 gezeigten Zustand) über eine beabsichtigte Entmantelungslänge e einfahren kann. Die vier Rollenelemente 25 sind so voneinander beabstandet, dass das zu entmantelnde Rohrende 1 unter Presspassung in den Aufnahmeraum 31 eingesteckt wird. Das heißt, die vier Rollenelemente 25 drücken mit ihren Rollenflächen 29 jeweils mit einer Anpresskraft F_{A} (Fig. 7) gegen den Außenumfang des zu entmantelnden Rohrendes 1.

Die Rohrachse R sowie die Drehachsen D sind achsparallel zueinander angeordnet, so dass jedes der Rollenelemente 25 mit seinen Rollenflächen 29 jeweils über die gesamte beabsichtigte Entmantelungslänge e in einem durchgängigen Linienkontakt mit der abzulösenden Kunststoffbeschichtung 15 ist.

Wie speziell in der Fig. 7 gezeigt ist, weisen die Rollenelemente 25 an ihren, vom Träger 23 abgewandten Umfangskanten jeweils eine angeformte Prägekante 35 auf, die mit einem geringfügigen Übermaß Δh radial nach außen von den Rollenflächen 29 abragen. Bei in den Aufnahmeraum 31 eingesetztem Rohrende 1 erzeugen die Prägekanten 35 der Rollenelemente 25 eine umlaufende Sollbruchkante in der Kunststoffbeschichtung 15.

Nach dem Einsetzen des Rohrendes 1 in den Aufnahmeraum 31 wird das Entmantelungs-Werkzeug 19 drehbetätigt. Dadurch werden die Rollenelemente 25 in einem Abrollvorgang um das Rohrende 1 gedreht. Die Rollenelemente 25 befinden sich jeweils mit der Anpresskraft F_{A} in Rollkontakt mit der abzulösenden Kunststoffbeschichtung 15. Auf diese Weise wird die Kunststoffbeschichtung 15 im Bereich des Rohrendes 1 einer Walkbearbeitung unterworfen, bei der sich die Gefügestruktur der Kunststoffbeschichtung 15 ändert und diese versprödet. Dadurch kann sich die Kunststoffbeschichtung 15 rückstandfrei vom Rohrkern 13 ablösen und gleichzeitig auch von der durch die Prägekanten 35 gebildete Sollbruchstelle abreißen. Auf diese Weise ist eine prozesssichere scharfe Abrisskante zur noch verbleibenden Kunststoffbeschichtung 15 erzeugt. Das Übermaß Δh der Schneidkanten 35 ist kleiner als die Materialstärke s (Fig. 7) der abzutragenden Kunststoffbeschichtung 15 bemessen.

## Patentansprüche

1. Vorrichtung zum Entmanteln eines Rohrendes (1) einer mit einer Kunststoffbeschichtung (15) beschichteten Brems- oder Kraftstoffleitung (2), die einen metallischen Rohrkern (13) aufweist, **dadurch gekennzeichnet, dass** die Vorrichtung zumindest ein Druckelement (25) aufweist, mit dem die Kunststoffbeschichtung (15) durch eine mechanische Walkbearbeitung vom Rohrkern (13) ablösbar ist, bei der die Kunststoffbeschichtung (15) wechselweise einer Druckbelastung und einer Druckentlastung unterworfen ist, und dass die Druckbelastung und die Druckentlastung durch das Druckelement (25) derart bemessen ist, dass die Kunststoffbeschichtung (15) bei der Walkbearbeitung unter Änderung der Gefügestruktur versprödet.

2. Vorrichtung nach Anspruch 1, **dadurch gekennzeichnet, dass** das Druckelement (25) ein drehbar gelagertes Rollenelement ist, das mit einer Anpresskraft (F_{A}) in Rollkontakt mit dem zu entmantelnden Rohrende (1) bringbar ist, und dass die Walkbearbeitung durch einen Abrollvorgang des Rollenelements (25) auf dem zu entmantelnden Rohrende (1) erfolgt.

3. Vorrichtung nach Anspruch 1 oder 2, **dadurch gekennzeichnet, dass** das Rollenelement (25) um eine Drehachse (D) rotierbar ist, die achsparallel zur Längsachse (R) des Rohrendes (1) positioniert ist, und/oder dass das Rollenelement (25) mit seiner Rollfläche (29) über eine vorgegebene Entmantelungslänge (e) durchgängig in Linienkontakt mit dem zu entmantelnden Rohrende (1) ist.

4. Vorrichtung nach einem der vorhergehenden Ansprüche, **dadurch gekennzeichnet, dass** ein Schneidelement (35) vorgesehen ist, mit der eine Sollbruchkante (14) festlegbar ist, an der die Kunststoffbeschichtung (15) bei der Walkbearbeitung abreißt.

5. Vorrichtung nach Anspruch 4, **dadurch gekennzeichnet, dass** das Schneidelement (35) eine am Rollenelement (25) angeformte Schneidkante ist, und dass insbesondere die Schneidkante mit einem vorgegebenen Übermaß (Δh) die Rollfläche (29) des Rollenelements (25) überragt, wobei insbesondere das Übermaß (Δh) der Schneidkante (35) kleiner als die Materialstärke (s) der abzutragenden Kunststoffbeschichtung (15) ist.

6. Vorrichtung nach einem der vorhergehenden Ansprüche, **dadurch gekennzeichnet, dass** zur Durchführung des Abrollvorgangs die Drehachse (D) des Rollenelements (25) um die Längsachse (R) des Rohrendes (1) rotierbar gelagert ist.

7. Vorrichtung nach einem der Ansprüche 2 bis 6, **dadurch gekennzeichnet, dass** eine Anzahl von Rollenelementen (25) vorgesehen ist, die insbesondere gleichmäßig umfangsverteilt um das Rohrende (1) angeordnet sind.

8. Vorrichtung nach Anspruch 7, **dadurch gekennzeichnet, dass** die Rollenelemente (25) mit ihren Rollenflächen (29) einen Aufnahmeraum (31) begrenzen, in den das zu entmantelnde Rohrende (1) einsteckbar ist, und zwar insbesondere unter einer Presspassung, bei der die Rollenelemente (25) mit der Anpresskraft (F_{A}) gegen das Rohrende (1) drücken.

9. Vorrichtung nach Anspruch 8, **dadurch gekennzeichnet, dass** die Vorrichtung ein Anfaswerkzeug aufweist, mit dem vor dem Entmanteln die stirnseitige Außenkante (17) des Rohrendes (1) anfasbar ist, wodurch ein Einfädeln des Rohrendes (1) in den Aufnahmeraum (31) vereinfacht ist.

10. Verfahren zum Entmanteln eines Rohrendes (1) einer mit einer Kunststoffbeschichtung (15) beschichteten Brems- oder Kraftstoffleitung (2), insbesondere mittels einer Vorrichtung nach einem der vorhergehenden Ansprüche, bei dem eine mechanische Walkbearbeitung der Kunststoffbeschichtung (15) erfolgt, bei der die Kunststoffbeschichtung (15) wechselweise einer Druckbelastung und einer Druckentlastung unterworfen wird und darauffolgend von dem Rohrkern (13) abgelöst wird, wobei die Druckbelastung und die Druckentlastung durch das Druckelement (25) derart bemessen ist, dass die Kunststoffbeschichtung (15) bei der Walkbearbeitung unter Änderung der Gefügestruktur versprödet.

## Claims

1. Device for removing the coating from a pipe end (1) of a brake or fuel line (2) which is coated with a plastic coating (15) and which has a metal pipe core (13), **characterized in that** the device comprises at least one pressure element (25), which can be used to detach the plastic coating (15) from the pipe core (13) by way of a mechanical flexing process, in which the plastic coating (15) is subjected alternately to a pressure load and a pressure release, and **in that** the pressure load and the pressure release by the pressure element (25) are such that the plastic coating (15) is caused to become brittle during the flexing process with changes to its structural constitution.

2. Device according to Claim 1, **characterized in that** the pressure element (25) is a pivotably mounted roller element, which can be brought with a pressing force (F_{A}) into rolling contact with the pipe end (1) that is to be uncoated, and **in that** the flexing process occurs through a rolling operation of the roller element (25) on the pipe end (1) that is to be uncoated.

3. Device according to Claim 1 or 2, **characterized in that** the roller element (25) is rotatable about a rotation axis (D) that is positioned axially parallel to the longitudinal axis (R) of the pipe end (1), and/or **in that** the rolling surface (29) of the roller element (25) is continuously in linear contact with the pipe end (1) to be uncoated over a defined uncoating length (e).

4. Device according to any one of the preceding claims, **characterized in that** a cutting element (35) is provided which can be used to establish a predetermined breaking edge (14) at which the plastic coating (15) tears off during the flexing process.

5. Device according to Claim 4, **characterized in that** the cutting element (35) is a cutting edge which is formed integrally on the roller element (25), and **in that** in particular the cutting edge protrudes beyond the rolling surface (29) of the roller element (25) by a predefined oversize (Δh), wherein in particular the oversize (Δh) of the cutting edge (35) is less than the material thickness (s) of the plastic coating (15) to be removed.

6. Device according to any one of the preceding claims, **characterized in that**, in order to carry out the rolling operation, the rotation axis (D) of the roller element (25) is mounted so as to be rotatable about the longitudinal axis (R) of the pipe end (1).

7. Device according to any one of Claims 2 to 6, **characterized in that** a number of roller elements (25) are provided, which are arranged in particular in an even distribution around the circumference of the pipe end (1).

8. Device according to Claim 7, **characterized in that** the rolling surfaces (29) of the roller elements (25) delimit a receiving space (31), into which the pipe end (1) to be uncoated can be inserted, specifically in particular with a press fit, in which the roller elements (25) press against the pipe end (1) with the pressing force (F_{A}).

9. Device according to Claim 8, **characterized in that** the device comprises a chamfering tool, with which the front outer edge (17) of the pipe end (1) can be chamfered before the uncoating, thus simplifying the threading of the pipe end (1) into the receiving space (31).

10. Method for removing the coating from a pipe end (1) of a brake or fuel line (2) which is coated with a plastic coating (15), in particular using a device according to any one of the preceding claims, in which method a mechanical flexing process of the plastic coating (15) occurs, in which the plastic coating (15) is subjected alternately to a pressure load and a pressure release and is subsequently detached from the pipe core (13), wherein the pressure load and the pressure release by the pressure element (25) are such that the plastic coating (15) is caused to become brittle during the flexing process with changes to its structural constitution.

## Revendications

1. Dispositif servant à dénuder une extrémité de tuyau (1) d'un conduit de liquide de frein ou de carburant (2) revêtu d'un revêtement en plastique (15), qui présente une partie centrale de tube (13) métallique, **caractérisé en ce que** le dispositif présente au moins un élément de pression (25), avec lequel le revêtement en plastique (15) peut être décollé de la partie centrale de tube (13) par un usinage par foulage mécanique, dans lequel le revêtement en plastique (15) est soumis en alternance à une contrainte de pression et à un relâchement de pression, et **en ce que** la contrainte de pression et le relâchement de pression par l'élément de pression (25) présentent des valeurs telles que le revêtement en plastique (15) se fragilise lors de l'usinage par foulage en changeant la structure d'assemblage.

2. Dispositif selon la revendication 1, **caractérisé en ce que** l'élément de pression (25) est un élément rouleau monté de manière à pouvoir tourner, lequel peut être amené en contact de roulement avec l'extrémité de tube (1) à dénuder par une force de compression (F_{A}), et que l'usinage par foulage est effectué par une opération de déroulement de l'élément rouleau (25) sur l'extrémité de tube (1) à dénuder.

3. Dispositif selon la revendication 1 ou 2, **caractérisé en ce que** l'élément rouleau (25) peut tourner autour d'un axe de rotation (D), qui est positionné de manière axialement parallèle par rapport à l'axe longitudinal (R) de l'extrémité de tube (1), et/ou que l'élément rouleau (25) est en continu en contact linéaire avec l'extrémité de tube (1) à dénuder par sa surface de roulement (29) sur une longueur de dénudage (e) prédéfinie.

4. Dispositif selon l'une quelconque des revendications précédentes, **caractérisé en ce qu'**un élément de découpage (35) est prévu, avec lequel une arête de rupture théorique (14) peut être fixée, au niveau de laquelle le revêtement en plastique (15) se déchire lors de l'usinage par foulage.

5. Dispositif selon la revendication 4, **caractérisé en ce que** l'élément de découpage (35) est une arête de découpage formée au niveau de l'élément rouleau (25), et qu'en particulier l'arête de découpage dépasse la surface de roulement (29) de l'élément rouleau (25) d'une dimension supérieure (Δh) prédéfinie, dans lequel la dimension supérieure (Δh) de l'arête de découpage (35) est en particulier plus petite que l'épaisseur de matériau (s) du revêtement en plastique (15) à enlever.

6. Dispositif selon l'une quelconque des revendications précédentes, **caractérisé en ce que** l'axe de rotation (D) de l'élément rouleau (25) est monté de manière à pouvoir tourner autour de l'axe longitudinal (R) de l'extrémité de tube (1) aux fins de la réalisation de l'opération de déroulement.

7. Dispositif selon l'une quelconque des revendications 2 à 6, **caractérisé en ce qu'**un nombre donné d'éléments rouleaux (25) est prévu, lesquels sont disposés en particulier selon une répartition homogène en périphérie autour de l'extrémité de tube (1).

8. Dispositif selon la revendication 7, **caractérisé en ce que** les éléments rouleaux (25) délimitent, par leurs surfaces de rouleau (29), un espace de réception (31), dans lequel l'extrémité de tube (1) à dénuder peut être emboîtée, et ce en particulier par un ajustement par serrage, lors duquel les éléments rouleaux (25) exercent une pression contre l'extrémité de tube (1) avec la force de compression (F_{A}),

9. Dispositif selon la revendication 8, **caractérisé en ce que** le dispositif présente un outil de chanfreinage, avec lequel l'arête extérieure (17) côté frontal de l'extrémité de tube (1) peut être chanfreinée avant le dénudage, l'extrémité de tube (1) étant ainsi enfilée de manière simplifiée dans l'espace de réception (31).

10. Procédé servant à dénuder une extrémité de tube (1) d'un conduit de liquide de frein ou de carburant (2) revêtu d'un revêtement en plastique (15), en particulier au moyen d'un dispositif selon l'une quelconque des revendications précédentes, où un usinage par foulage mécanique du revêtement en plastique (15) est effectué, dans lequel le revêtement en plastique (15) est soumis en alternance à une contrainte de pression et à un relâchement de pression et est décollé par la suite de la partie centrale de tube (13), la contrainte de pression et le relâchement de pression par l'élément de pression (25) présentant des valeurs telles que le revêtement en plastique (15) se fragilise lors de l'usinage par foulage en changeant la structure d'assemblage.
